# EUROPÄISCHE PATENTSCHRIFT

(11) **EP 2 484 548 B1**
(45) Veröffentlichungstag und Bekanntmachung des Hinweises auf die Patenterteilung: **10.04.2013**
(21) Anmeldenummer: 12002683.6
(22) Anmeldetag: 06.06.2009
(51) Int. Cl.: B60N 2/225

(54) **Verstellbeschlag**
Adjustment fitting
Armature réglable

(30) Priorität: 13.06.2008 DE 102008028096
(43) Veröffentlichungstag der Anmeldung: 08.08.2012
(62) Teilanmeldung aus: 09761440.8
(73) Patentinhaber: Brose Fahrzeugteile GmbH & Co., 96450 Coburg (DE)
(72) Erfinder: Zellmann, Michael, 96120 Bischberg (DE); Krüger, Frieder, 96450 Coburg (DE); Blinzler, André, 96271 Grub am Forst (DE); Hartleb, Stephanie, 96279 Weidhausen (DE); Siller, Jürgen, 96472 Rödental (DE); Möller, Volker, 96450 Coburg (DE); Weiss, Matthias, 96472 Rödental (DE)
(74) Vertreter: FDST Patentanwälte

(56) Entgegenhaltungen:
- DE-A1- 10 144 840
- DE-B3-102005 053 312
- DE-B3-102005 056 728

## Beschreibung

Die Erfindung betrifft einen Verstellbeschlag, insbesondere für einen Fahrzeugsitz, mit einem ersten Beschlagteil und einem relativ zum ersten Beschlagteil um eine Drehachse drehverstellbaren zweiten Beschlagteil, wobei dem ersten Beschlagteil ein Außenrad mit einer Innenverzahnung zugeordnet ist, in welches ein dem zweiten Beschlagteil zugeordnetes Innenrad mit einer Außenverzahnung nach Art eines Taumelgetriebes eingesetzt ist, und wobei das Innenrad zur Drehachse einen exzentrischen Aufnahmeraum bildet, mit einem in den exzentrischen Aufnahmeraum drehbar eingesetzten Exzenter, und mit einer Antriebswelle zum Antrieb des Exzenters.

Bei einem derartigen Verstellbeschlag sind das erste Beschlagteil und das zweite Beschlagteil nach Art eines Taumelgetriebes zusammengefügt, wobei sich bei Antrieb des Exzenters das Innenrad taumelnd über seine Außenverzahnung an der Innenverzahnung des Außenrads abrollt. Die Anzahl der Zähne der Außenverzahnung ist von der Anzahl der Zähne der Innenverzahnung verschieden. Bei einem vollständigen Umlauf des Exzenters resultiert eine Relativdrehung des Innenrads gegenüber dem Außenrad um die Zahndifferenz. Ein Verstellbeschlag mit Taumelgetriebe hat sich in der Fahrzeugtechnik zur Verstellung der Lehne gegenüber dem Sitzunterteil eines Fahrzeugsitzes durchgesetzt. Ein Taumelgetriebe ist mit vergleichsweise wenigen mechanischen Bauteilen zu verwirklichen und ermöglicht bei zugleich flacher Bauweise eine zur Verstellung gewünschte Übersetzung.

Ein Verstellbeschlag der eingangs genannten Art ist beispielsweise aus der DE 10 2005 053 312 B3 bekannt. Dort ist ein Abdeckkappe gezeigt, die mittels einer radial flexiblen Dichtlippe am Umfang eines Drehverstellglieds verclipsbar ist, und die den Aufnahmeraum unter einer axialen Vorspannung gegen ein Beschlagteil abdichtet. Durch die radial flexible Dichtlippe soll ein Verdrehen der Abdeckkappe gegenüber dem Beschlagteil und somit das Auftreten von Undichtigkeit vermieden werden. Die Abdeckkappe verdreht sich vielmehr gegenüber dem Drehverstellglied.

Auch aus der DE 101 44 840 B4 ist für einen Verstellbeschlag der eingangs genannten Art eine Abdeckkappe des Aufnahmeraums bekannt. Dabei ist die Abdeckkappe aus einem Dichtring und einer Abdeckscheibe gebildet, wobei der Dichtring mit seinem Außenrand unter axialer Vorspannung gegen ein Beschlagteil dichtet. Dort schleift der Dichtring am Beschlagteil bei einer Betätigung des Verstellbeschlags.

Weiter ist aus der DE 10 2005 056 728 B3 ein Verstellbeschlag mit einer Abdeckkappe der genannten Art bekannt. Auch hier deckt der Rand der Abdeckkappe unter einer axialen Vorspannung den exzentrischen Aufnahmeraum ab.

Die bekannten Abdeckkappen zur Abdeckung des exzentrischen Aufnahmeraums dienen dazu, Schmutz und sonstige Verunreinigungen vom Gelenkbereich des Verstellbeschlags abzuhalten. Insbesondere soll bei Lackierarbeiten kein Lack in das Innere des Verstellbeschlags eindringen.

Üblicherweise wird nämlich ein Verstellbeschlag vor seinem Einsatz mittels eines Tauchlackier-Verfahrens, insbesondere mittels eines kathodischen Tauchlackier-Verfahrens, mit Lack beschichtet, um eine höhere Korrosionsbeständigkeit zu erzielen. Dabei sollte ein Eindringen des Lackes in das Innere des Beschlages vermieden werden, da eingedrungener Lack unerwünschterweise die das Getriebe bildenden mechanischen Teile beaufschlagen kann. Unter Umständen kann dies zu einer Funktionseinbuße des Verstellbeschlags führen.

Aufgabe der Erfindung ist es, einen Verstellbeschlag der eingangs genannten Art anzugeben, der eine verbesserte Abdichtung des exzentrischen Aufnahmeraums aufweist.

Diese Aufgabe wird erfindungsgemäß durch einen Verstellbeschlag mit der Merkmalskombination gemäß Anspruch 1 gelöst. Demnach ist in den Axialspalt zwischen den Beschlagteilen eine Zentraldichtung eingesetzt.

Diese Idee geht von der bisherigen Praxis aus, dauerhafte Abdeckkappen zur Abdichtung der offenen axialen Zugänge zum Innenraum vorzusehen, und für die Abdichtung von Spalten des Verstellbeschlags, die ebenfalls einen Zugang zum Aufnahmeraum bilden, gegen das Eindringen von Lack Fett zu verwenden. Bei dieser Praxis kann es aber bei der Vorbehandlung des Verstellbeschlags bereits zu einer Kontamination des Innenraums des Verstellbeschlags mit Spülflüssigkeit kommen. Während der Tauchlackierung selbst kann dann unerwünschterweise Fett ausgespült werden, so dass dennoch Lack eindringen kann. Zudem führt ausgetretenes Fett zu Qualitätseinbußen beim Lackierprozess. Ferner kann im Beschlag nur "lackverträgliches" Fett eingesetzt werden, was mit Kostennachteilen verbunden ist.

Es wird nun erkannt, dass sich der zur Relativdrehung notwendige Axialspalt zwischen den Beschlagteilen, der zwangsläufig einen Zugang zum exzentrischen Aufnahmeraum des Verstellbeschlags bildet, für eine dauerhafte Abdichtung eignet. Wird in den Axialspalt zwischen dem ersten und dem zweiten Beschlagteil eine Zentraldichtung eingesetzt, so wird der Zugang zu dem äußeren Ringraum zwischen dem Innenrad und dem Außenrad dichtend abgeschlossen. Ein Eindringen von Schmutz und insbesondere von Lack während des Lackierprozesses über den äußeren Ringraum zwischen dem Innenrad und dem Außenrad ist somit sicher und dauerhaft verhindert, ohne dass die geschilderte Problematik einer Abdichtung mittels Fett auftritt. Die Beschlagteile gleiten dabei bei einer Verstellung des Beschlags der Zentraldichtung entlang. Die Zentraldichtung wirkt somit gleichermaßen als statische wie als dynamische Dichtung. Die Erfindung weist somit eine Möglichkeit auf, eine weitergehende Abdichtung der Getriebeteile des Verstellbeschlags zu erzielen, um sicher ein Eindringen von Schmutz und insbesondere von Lack während des Lackierprozesses in den Aufnahmeraum zu verhindern. Als Material für die Zentraldichtung eignet sich grundsätzlich jedes Elastomer, solange es genügend formbeständig ist und insbesondere einem kathodischen Tauchlackierverfahren standhält. Insbesondere sollte das Material Temperaturen bis etwa 200°C standhalten. Als Material ist ein geeigneter Kunststoff oder Gummi vorstellbar. Bevorzugt wird als Material für die Zentraldichtung ein Polyamid eingesetzt. Die Zentraldichtung kann einen Teil des Axialspalts oder diesen vollständig ausfüllen.

Wie erwähnt werden zur Montage des Verstellbeschlags an spezifische Fahrzeugsitze dem Außen- und/oder dem Innenrad typspezifische Adapter bzw. Adapterbleche beispielsweise durch Schweißung, insbesondere durch Laserschweißung, angebunden. Insbesondere ist bevorzugt dem Innenrad umlaufend ein Adapterblech angebunden, welches mit einem Axialspalt vom Außenrad beabstandet ist. Bevorzugt ist hierbei die Zentraldichtung in den Axialspalt zwischen dem Adapter und dem Außenrad eingesetzt.

In einer vorteilhaften Ausgestaltung ist die Zentraldichtung scheibenförmig mit einem äußeren Dichtrand ausgebildet, wobei der äußere Dichtrand einen im Wesentlichen Y-förmigen Querschnitt mit radial nach außen gerichteten und axial auseinander strebenden Schenkeln aufweist, die sich zwischen das erste und das zweite Beschlagteil, insbesondere zwischen das Außenrad und den Adapter, spreizen. Durch diese Ausgestaltung wird Schmutz und insbesondere Lack sicher vor einem Eindringen in den genannten Axialspalt abgehalten. Der Innenraum des Verstellbeschlags ist gesichert.

Weiter bevorzugt umfasst das Außenrad eine sich in axialer Richtung über die Innenverzahnung hinaus verlängerte Außenwand, die mit einem radial einwärts gerichteten Kragen die Außenverzahnung des Innenrads übergreift, wobei die Zentraldichtung einen inneren axialen Dichtrand aufweist, der in den Kragen eingesetzt ist. Die verlängerte Außenwand und der Übergriff über die Außenverzahnung des Innenrads können insbesondere auch durch eine zweiteilige Ausgestaltung des Außenrads erfolgen. Hierbei wird das Außenrad an der Innenverzahnung geteilt, so dass gewissermaßen eine Ober- und eine Unterschale entstehen. Zwischen der Ober- und der Unterschale ist dann die Außenverzahnung des Innenrads sicher gelagert bzw. geführt. Andererseits kann der Übergriff in der verlängerten Außenwand auch mittels eines Halteelements erfolgen, welches der Innenverzahnung des Innenrads in axialer Richtung in der Außenwand des Außenrads nachgeführt und an entsprechender Position mit der Außenwand verbunden, insbesondere verschweißt ist. Dies bietet die zusätzliche Möglichkeit der Einstellung des Axialspiels zwischen dem Innen- und dem Außenrad.

Mit dem inneren axialen Dichtrand ist die Zentraldichtung dann in die Außenwand des Außenrads eingesetzt. Damit werden ein Verdrehen und ein Verrutschen der Zentraldichtung gegenüber dem Außenrad verhindert. Auch die Montage ist hierdurch vereinfacht.

Zweckmäßigerweise läuft der innere axiale Dichtrand der Zentraldichtung in einem radial nach innen gekrümmten Ende aus. Auf diese Weise wird der Verzahnungsbereich zusätzlich gegen Schweißspritzer geschützt.

Bevorzugt ist zur Abdichtung des offenen Aufnahmeraums eine Abdeckkappe vorgesehen.

Vorteilhafterweise ist die Antriebswelle als ein durchgehender Lagerzapfen ausgebildet. Hierdurch wird die Montage des Verstellbeschlags erleichtert. Ein solcher Lagerzapfen bietet zudem die Möglichkeit, die Bauteile des Verstellbeschlags in axialer Richtung zusammenzuhalten.

Bevorzugt sind die Abdeckkappe und der Lagerzapfen einstückig ausgebildet. Gegenüber bekannten Abdeckkappen gemäß Stand der Technik entfällt bei dieser Ausgestaltung eine notwendige Anbindung der Abdeckkappe an einem Verstellglied, insbesondere eine Verclipsung oder eine Verrastung. Eine solche einstückige Ausgestaltung ist nunmehr ermöglicht, da die Abdichtung des Aufnahmeraums in radialer Richtung erfolgt. Durch die einstückige Ausgestaltung sind weiter die Herstellkosten verringert. Ebenfalls ist die Montage des Verstellbeschlags vereinfacht.

In einer weiter bevorzugten Ausgestaltung des Verstellbeschlags umfasst das Außenrad einen Boden mit einer zentralen Bohrung, in der der Lagerzapfen mit seinem der Abdeckkappe abgewandten Ende gelagert ist, wobei der Lagerzapfen gegen den Boden mit einer Sicherungsscheibe gehalten ist, und wobei die Sicherungsscheibe einen Dichtrand umfasst, der den radialen Spalt zwischen dem Lagerzapfen und dem Boden unter einer axial gegen den Boden gerichteten Vorspannung abdeckt. Die Sicherungsscheibe wirkt demnach als Abdeckung der "Rückseite" des Verstellbeschlags, da sie den rückwärtigen radialen Spalt zwischen dem Lagerzapfen und dem Boden des Außenrads abdeckt. Da die Sicherungsscheibe den Verstellbeschlag hält, ist diese vorteilhafterweise durch ein Verstärkungselement, insbesondere ein eingelagertes Stahlelement, mechanisch gestützt. Der Dichtrand der Sicherungsscheibe kann wieder aus einem geeigneten Elastomer bestehen.

Bevorzugt ist der Boden auf der der Sicherungsscheibe zugewandten Seiten tellerförmig eingesenkt. Zum einen wird hierdurch die axiale Höhe des Verstellbeschlags verringert. Zum anderen ist hierdurch eine sichere rückwärtige Abdichtung des Aufnahmeraums sichergestellt.

Für eine stabile Lagerung umfasst der Boden einen die Bohrung umlaufenden Kragenzug, in dem der Lagerzapfen gelagert ist. Über die in axialer Richtung vergrößerte Auflagefläche des Kragenzugs wird die Lagerung des Lagerzapfens stabilisiert. Insbesondere wird ein Verkippen des Lagerzapfens sicher vermieden.

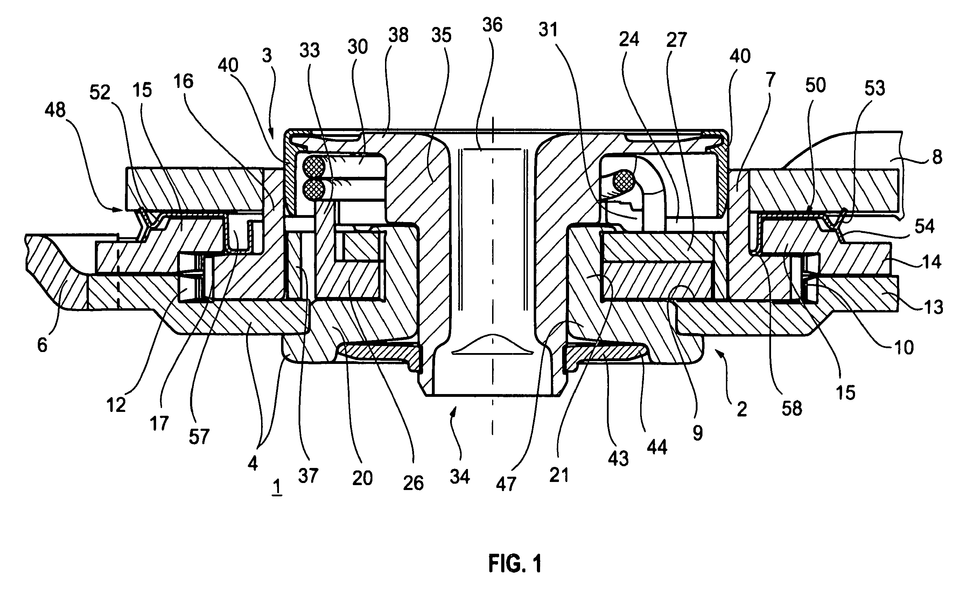

Ein Ausführungsbeispiel der Erfindung wird anhand einer Zeichnung näher erläutert. Dabei zeigt die einzige Figur 1 in einem Querschnitt einen Verstellbeschlag mit einer Abdichtung des exzentrischen Aufnahmeraums.

Aus der Querschnittsdarstellung gemäß Fig. 1 wird ein Verstellbeschlag 1 ersichtlich, der ein erstes Beschlagteil 2 sowie ein zweites Beschlagteil 3 umfasst, die relativ zueinander um eine Drehachse drehverstellbar sind. Das erste Beschlagteil 2 besteht aus einem Außenrad 4, welchem zur späteren Montage an einer Sitzlehne ein entsprechender Lehnenadapter 6, insbesondere mittels einer Schweißung, angebunden ist. Das zweite Beschlagteil 3 umfasst ein Innenrad 7 sowie einen mit diesem verbundenen Sitzadapter 8 zur Anbindung an ein Sitzunterteil.

Das Außenrad 4 ist als ein Hohlrad mit einem Boden 9 und einer Außenwand 10 ausgebildet, wobei an der Außenwand 10 eine Innenverzahnung 12 angebracht ist. Das Außenrad 4 ist entlang der Innenverzahnung 12 geteilt und aus einer ersten Schale 13 und einer zweiten Schale 14 zusammengesetzt. Die zweite Schale 14 übergreift mit einem umlaufenden Kragen 15 die einer hochgezogenen Innenwand 16 des Innenrads 7 angebrachte Außenverzahnung 17. Auf diese Weise wird das Innenrad 7 zwischen der ersten Schale 13 und der zweiten Schale 14 des Außenrads 4 sicher axial gehalten. Weiter weist das Außenrad 4 einen separat eingesetzten Dom 20 auf, der einen umlaufenden Kragenzug 21 trägt. Die Ausgestaltung eines separaten Doms 20 bietet die Möglichkeit, die unterschiedlichen tribologischen Eigenschaften hinsichtlich Lagerung und Getriebe durch entsprechende Materialauswahl zu optimieren.

Zwischen dem Kragenzug 21 und der hochgezogenen Innenwand 16 des Innenrads 7 ist ein exzentrischer, ringförmiger Aufnahmeraum 24 gebildet, in den zum Antrieb des Innenrads 7 ein erster Teilexzenter 26 und ein zweiter Teilexzenter 27 eingesetzt sind. Die beiden Teilexzenter 26,27 bilden unter Verdrehung eine variable Gesamtexzentrizität aus, und sind mittels eines Federelements 30 zur Ausbildung einer maximalen Gesamtexzentrizität vorgespannt. In dieser vorgespannten Ausgangslage wird das Innenrad 7 mit seiner Außenverzahnung 17 in Richtung der größten Exzentrizität gegen die Innenverzahnung 12 des Außenrads 4 spielfrei gedrückt, so dass ein Ablaufen der Beschlagteile 2,3 zueinander nicht ermöglicht ist.

Zur Betätigung der Teilexzenter 26,27 ist weiter in den exzentrischen Aufnahmeraum 24 eine Mitnehmerscheibe 31 eingesetzt, in die Mitnehmernasen 33 der jeweiligen Teilexzenter 26,27 eingreifen. Die Mitnehmerscheibe 31 ist drehfest mit der zentralen Antriebswelle 34 verbunden, die vorliegend als ein durchgehender Lagerzapfen 35 ausgebildet ist. Wird der Lagerzapfen 35 angetrieben bzw. verdreht, so werden über die drehfest angebundene Mitnehmerscheibe 31 die Teilexzenter 26,27 entgegen der Vorspannung des Federelements 30 verdreht, so dass nunmehr das Innenrad 7 dem Außenrad 4 unter Spiel anliegt. Der aus den Teilexzentern 26,27 bestehende Gesamtexzenter kann verdreht werden, wobei sich das Innenrad 7 über seine Außenverzahnung 17 an der Innenverzahnung 12 des Außenrads 4 abrollt. Bei einem vollen Umlauf des Exzenters ergibt sich eine Relativdrehung des Innenrads 7 gegenüber dem Außenrad 4 entsprechend einer Zahndifferenz zwischen der Außenverzahnung 17 und der Innenverzahnung 12.

Zum Antrieb des Lagerzapfens 35 weist dieser an seiner oberen Seite eine Vierkantöffnung 36 auf. Auf der gegenüberliegenden Seite ist eine Aufnahme für eine weiterführende Welle vorgesehen, die gegebenenfalls zum Antrieb eines entsprechenden Verstellbeschlags auf der anderen Seite des Fahrzeugsitzes vorgesehen ist.

Zur Verringerung der Reibung zwischen den Teilexzentrizitäten 26,27 und dem Innenrad 7 ist in den Innenumfang des Innenrads 7 eine Gleitlagerbuchse 37 eingesetzt.

Der Lagerzapfen 35 ist einstückig mit einer Abdeckkappe 38 ausgebildet, die den exzentrischen Aufnahmeraum 24 nach außen abdichtet. Die Abdeckkappe 38 ist scheibenförmig ausgebildet und radial gegenüber der Antriebswelle 34 versetzt. Mit anderen Worten ist die Abdeckkappe 38 exzentrisch ausgebildet. Die exzentrische Abdeckkappe 38 umfasst weiter einen axial nach unten gezogenen Dichtrand 40, der in den exzentrischen Aufnahmeraum 24 eintaucht. Über eine radial nach außen gerichtete Vorspannung gegen die Innenwand 16 des Innenrads 7 dichtet der umlaufende Dichtrand 40 den exzentrischen Aufnahmeraum 24 nach außen ab. Der Dichtrand 40 ist aus einem spritzbaren Elastomer gefertigt und dem Lagerzapfen 35 mittels eines Zwei-Komponenten-Spritzverfahrens angespritzt. Man erkennt, dass die axiale Länge des Dichtrands 40 so bemessen ist, dass mit ein und demselben Lagerzapfen 35 verschiedene Varianten des Verstellbeschlags 1, die sich in der axialen Höhe unterscheiden, abdichtet. Ein axialer Versatz des Dichtrands 40 gegenüber der Innenwand 16 innerhalb eines gewissen Rahmens verändert die Dichtfunktion nicht. Insbesondere gilt dies auch für den Fall, dass der axiale Dichtrand 40 nicht gegen die Innenwand 16 des Innenrads 7 sondern direkt gegen einen umlaufenden Rand des Sitzadapters 8 abdichtet.

Auf der der Abdeckkappe 38 abgewandten Seite ist der Lagerzapfen 35 mittels einer Sicherungsscheibe 43 an dem Verstellbeschlag 1 gehalten. Der axiale Zusammenhalt der Beschlagteile 2,3 wird durch das als Hohlrad ausgebildete Außenrad 4 bewerkstelligt. Die Sicherungsscheibe 43 weist einen umlaufenden Dichtrand 44 auf und ist in einer tellerförmigen Einsenkung 47 des Bodens 9 bzw. des separaten Doms 20 gehalten. Über eine Klipsverbindung der Sicherungsscheibe 43 an dem Lagerzapfen 35 wird eine axiale Vorspannung des Dichtrands 44 gegenüber dem Boden 9 erzielt. Die Sicherungsscheibe 43 hält somit nicht nur den Lagerzapfen 35 in dem Verstellbeschlag 1, sondern dichtet zudem den Radialspalt zwischen dem Lagerzapfen 35 und dem Dom 20 ab. Auch auf dieser Seite ist somit ein Eindringen von Schmutz bzw. ein Eindringen von Lack während des Lackierprozesses sicher verhindert.

Der Sitzadapter 8 ist in Form eines Sitzadapterblechs umlaufend der Innenwand 16 des Innenrands 7 angebunden, insbesondere angeschweißt. Dabei ist der Lehnenadapter 6 axial gegenüber dem Außenrad 4 beabstandet, um eine Relativdrehung zueinander zu ermöglichen. In den resultierenden Axialspalt 48 zwischen dem Sitzadapter 8 und dem Außenrad 4 ist weiter eine scheibenförmige Zentraldichtung 50 eingesetzt. Auf diese Weise wird der Innenraum des Verstellbeschlags 1 vollständig nach außen abgedichtet. Auch über den äußeren Ringspalt zwischen dem Innenrad 7 und dem Außenrad 4 kann weder Schmutz noch Lack in den inneren Getriebeteil gelangen.

Die scheibenförmige Zentraldichtung 50 weist weiter einen äußeren Dichtrand 52 mit einem im Wesentlichen Y-förmigen Querschnitt auf. Dabei erstrecken sich die beiden Schenkel 53,54 des äußeren Dichtrands 52 radial nach außen und spreizen sich axial gegen den Sitzadapter 8 bzw. gegen das Außenrad 4 ab. Auf diese

Weise wird sowohl Schmutz als auch insbesondere Lack sicher an einem Eindringen in den Innenraum des Verstellbeschlags 1 über den Axialspalt 48 gehindert.

Ferner weist die Zentraldichtung 50 einen inneren axialen Dichtrand 57 auf, mit dem sie in den Kragen 15 des Außenrads 4 eingesetzt ist. Hierdurch wird ein Verdrehen der Zentraldichtung 50 gegenüber dem Außenrad 4 verhindert. Der innere Dichtrand 57 weist ein nach innen gekrümmtes Ende 58 auf. Hierdurch ist das innere Getriebe des Verstellbeschlags 1 während des Herstellungsprozesses vor Schweißspritzern geschützt.

### Bezugszeichenliste

- 1: Verstellbeschlag
- 2: erstes Beschlagteil
- 3: zweites Beschlagteil
- 4: Außenrad
- 6: Lehnenadapter
- 7: Innenrad
- 8: Sitzadapter
- 9: Boden
- 10: Außenwand
- 12: Innenverzahnung
- 13: erste Schale
- 14: zweite Schale
- 15: Kragen
- 16: Innenwand
- 17: Außenverzahnung
- 20: Dom
- 21: Kragenzug
- 24: exzentrischer Aufnahmeraum
- 26: erster Teilexzenter
- 27: zweiter Teilexzenter
- 30: Federelement
- 31: Mitnehmerscheibe
- 33: Mitnehmemase
- 34: Antriebswelle
- 35: Lagerzapfen
- 36: Vierkantöffnung
- 37: Gleitlagerbuchse
- 38: Abdeckkappe
- 40: Dichtrand
- 43: Sicherungsscheibe
- 44: Dichtrand
- 47: tellerförmige Einsenkung
- 48: Axialspalt Adapter/Außenrad
- 50: Zentraldichtung
- 52: äußerer Dichtrand
- 53: erster Schenkel
- 54: zweiter Schenkel
- 57: innerer Dichtrand
- 58: gekrümmtes Ende

## Patentansprüche

1. Verstellbeschlag (1), insbesondere für einen Fahrzeugsitz, mit einem ersten Beschlagteil (2) und mit einem relativ zum ersten Beschlagteil (2) um eine Drehachse drehverstellbaren zweiten Beschlagteil (3) ,wobei dem ersten Beschlagteil (2) ein Außenrad (4) mit einer Innenverzahnung (12) zugeordnet ist, in welches ein dem zweiten Beschlagteil (3) zugeordnetes Innenrad (7) mit einer Außenverzahnung (17) nach Art eines Taumelgetriebes eingesetzt ist, und wobei das Innenrad (7) zur Drehachse einen exzentrischen Aufnahmeraum (24) bildet, mit einem in den exzentrischen Aufnahmeraum (24) drehbar eingesetzten Exzenter, und mit einer Antriebswelle (34) zum Antrieb des Exzenters,
**dadurch gekennzeichnet,**
**dass** in einen zwischen dem ersten Beschlagteil (2) und dem zweiten Beschlagteil (3) befindlichen Axialspalt eine Zentraldichtung (50) eingesetzt ist.

2. Verstellbeschlag (1) nach Anspruch 1,
**dadurch gekennzeichnet,**
**dass** dem Innenrad (7) umlaufend ein Adapter (8) angebunden ist, und dass die Zentraldichtung (50) in den resultierenden Axialspalt zwischen dem Adapter (8) und dem Außenrad (4) eingesetzt ist.

3. Verstellbeschlag (1) nach Anspruch 1 oder 2,
**dadurch gekennzeichnet,**
**dass** die Zentraldichtung (50) scheibenförmig mit einem äußeren Dichtrand (52) ausgebildet ist, wobei der äußere Dichtrand (52) einen im Wesentlichen Y-förmigen Querschnitt mit radial nach außen gerichteten und axial auseinander strebenden Schenkeln (53,54) aufweist, die sich zwischen das erste und das zweite Beschlagteil (3 bzw. 4) spreizen.

4. Verstellbeschlag (1) nach einem der vorhergehenden Ansprüche,
**dadurch gekennzeichnet,**
**dass** das Außenrad (4) eine sich in axialer Richtung über die Innenverzahnung (12) hinaus verlängerte Außenwand (10) umfasst, die mit einem radial einwärts gerichteten Kragen (15) die Außenverzahnung (17) des Innenrads (7) übergreift, und dass die Zentraldichtung (50) einen inneren axialen Dichtrand (57) aufweist, der in den Kragen (15) eingesetzt ist.

5. Verstellbeschlag (1) nach Anspruch 4,
**dadurch gekennzeichnet,**
**dass** der innere axiale Dichtrand (57) in einem radial nach innen gekrümmten Ende ausläuft.

6. Verstellbeschlag (1) nach einem der vorhergehenden Ansprüche,
**dadurch gekennzeichnet,**
**dass** zur Abdeckung des offenen Aufnahmeraums (24) eine Abdeckkappe (38) vorgesehen ist.

7. Verstellbeschlag (1) nach einem der vorhergehenden Ansprüche,
**dadurch gekennzeichnet,**
**dass** die Antriebswelle (34) als ein durchgehender Lagerzapfen (35) ausgebildet ist.

8. Verstellbeschlag (1) nach Ansprüchen 6 und 7,
**dadurch gekennzeichnet,**
**dass** die Abdeckkappe (38) und der Lagerzapfen (35) einstückig ausgebildet sind.

9. Verstellbeschlag (1) nach Anspruch 7 oder 8,
**dadurch gekennzeichnet,**
**dass** das Außenrad (4) einen Boden (9) mit einer zentralen Bohrung umfasst, in der der Lagerzapfen (35) mit seinem der Abdeckkappe (38) abgewandten Ende gelagert ist, dass der Lagerzapfen (35) gegen den Boden (9) mit einer Sicherungsscheibe (43) gehalten ist, und dass die Sicherungsscheibe (43) einen Dichtrand (40) umfasst, der den radialen Spalt zwischen dem Lagerzapfen (35) und dem Boden (9) unter einer axial gegen den Boden (9) gerichteten Vorspannung abdeckt.

10. Verstellbeschlag (1) nach Anspruch 9,
**dadurch gekennzeichnet,**
**dass** der Boden (9) auf der der Sicherungsscheibe (43) zugewandten Seite tellerförmig eingesenkt ist.

11. Verstellbeschlag (1) nach Anspruch 9 oder 10,
**dadurch gekennzeichnet,**
**dass** der Boden (9) einen die Bohrung umlaufenden Kragenzug (21) umfasst, in dem der Lagerzapfen (35) gelagert ist.

## Claims

1. Adjustment fitting (1), in particular for a vehicle seat, with a first fitting part (2) and with a second fitting part (3) which is rotationally adjustable about an axis of rotation relative to the first fitting part (3), wherein the first fitting part (2) is assigned an external gear (4) having an internal toothing (12), into which an internal gear (7), which is assigned to the second fitting part (3) and has an external toothing (17), is inserted in the manner of a wobble mechanism, and wherein the internal gear (7) forms an eccentric receiving space (24) with respect to the axis of rotation, with an eccentric which is inserted rotatably into the eccentric receiving space (24), and with a drive shaft (34) for driving the eccentric,
**characterized in that**
a central seal (50) is inserted into an axial gap located between the first fitting part (2) and the second fitting part (3).

2. Adjustment fitting (1) according to Claim 1,
**characterized in that**
an adapter (8) is peripherally connected to the internal gear (7), and **in that** the central seal (50) is inserted into the resulting axial gap between the adapter (8) and the external gear (4).

3. Adjustment fitting (1) according to Claim 1 or 2,
**characterized in that**
the central seal (50) is formed in a disc-shaped manner with an outer sealing edge (52), wherein the outer sealing edge (52) has a substantially Y-shaped cross section with radially outwardly directed and axially diverging limbs (53, 54) which expand between the first and the second fitting part (2 and 3).

4. Adjustment fitting (1) according to one of the preceding claims,
**characterized in that**
the external gear (4) comprises an external wall (10) which is extended in the axial direction beyond the internal toothing (12) and engages with a radially inwardly directed collar (15) over the external toothing (17) of the internal gear (7), and **in that** the central seal (50) has an inner axial sealing edge (57) which is inserted into the collar (15).

5. Adjustment fitting (1) according to Claim 4, **characterized in that** the inner axial sealing edge (57) tapers off in a radially inwardly curved end.

6. Adjustment fitting (1) according to one of the preceding claims,
**characterized in that**
a covering cap (38) is provided for covering the open receiving space (24).

7. Adjustment fitting (1) according to one of the preceding claims,
**characterized in that**
the drive shaft (34) is designed as a continuous journal (35).

8. Adjustment fitting (1) according to Claims 6 and 7,
**characterized in that**
the covering cap (38) and the journal (35) are formed as a single piece.

9. Adjustment fitting (1) according to Claim 7 or 8,
**characterized in that**
the external gear (4) comprises a base (9) with a central bore in which that end of the journal (35) which faces away from the covering cap (38) is mounted, **in that** the journal (35) is held against the base (9) by a retaining washer (43), and **in that** the retaining washer (43) comprises a sealing edge (40) which covers the radial gap between the journal (35) and the base (9) under a prestress directed axially towards the base (9).

10. Adjustment fitting (1) according to Claim 9,
**characterized in that**
the base (9) is countersunk in a plate-like manner on the side facing the retaining washer (43).

11. Adjustment fitting (1) according to Claim 9 or 10,
**characterized in that**
the base (9) comprises a collar formation (21) which encircles the bore and in which the journal (35) is mounted.

## Revendications

1. Armature réglable (1), en particulier pour un siège de véhicule, avec une première partie d'armature (2) et avec une deuxième partie d'armature (3) mobile en rotation autour d'un axe de rotation par rapport à la première partie d'armature (2), dans laquelle une roue extérieure (4) avec une denture intérieure (12) est associée à la première partie d'armature (2) et dans laquelle une roue intérieure (7) avec une denture extérieure (17) associée à la deuxième partie d'armature (3) est engagée à la manière d'un mécanisme à mouvement oscillant, et dans laquelle la roue intérieure (7) forme une chambre de réception (24) excentrique par rapport à l'axe de rotation, avec un excentrique introduit de façon rotative dans la chambre de réception excentrique (24), et avec un arbre d'entraînement (34) pour l'entraînement de l'excentrique, **caractérisée en ce qu'**un joint d'étanchéité central (50) est inséré dans une fente axiale se trouvant entre la première partie d'armature (2) et la deuxième partie d'armature (3).

2. Armature réglable (1) selon la revendication 1, **caractérisée en ce qu'**un adaptateur (8) est attaché en rotation à la roue intérieure (7), et **en ce que** le joint d'étanchéité central (50) est inséré dans la fente axiale résultante entre l'adaptateur (8) et la roue extérieure (4).

3. Armature réglable (1) selon la revendication 1 ou 2, **caractérisée en ce que** le joint d'étanchéité central (50) est réalisé en forme de rondelle avec un bord d'étanchéité extérieur (52), dans laquelle le bord d'étanchéité extérieur (52) présente une section transversale essentiellement en forme de Y avec des branches (53, 54) orientées radialement vers l'extérieur et s'éloignant axialement l'une de l'autre, qui s'écartent entre la première et la deuxième parties d'armature (2 ou 3).

4. Armature réglable (1) selon l'une quelconque des revendications précédentes, **caractérisée en ce que** la roue extérieure (4) comprend une paroi extérieure (10) prolongée en direction axiale au-delà de la denture intérieure (12), qui recouvre la denture extérieure (17) de la roue intérieure (7) avec une collerette (15) orientée radialement vers l'intérieur, et **en ce que** le joint d'étanchéité central (50) présente un bord d'étanchéité axial intérieur (57), qui est inséré dans la collerette (15).

5. Armature réglable (1) selon la revendication 4, **caractérisé en ce que** le bord d'étanchéité axial intérieur (57) se termine par une extrémité courbée radialement vers l'intérieur.

6. Armature réglable (1) selon l'une quelconque des revendications précédentes, **caractérisée en ce qu'**il est prévu une coiffe de couverture (38) pour recouvrir la chambre de réception ouverte (24).

7. Armature réglable (1) selon l'une quelconque des revendications précédentes, **caractérisée en ce que** l'arbre d'entraînement (34) est réalisé comme un bout d'arbre continu (35).

8. Armature réglable (1) selon les revendications 6 et 7, **caractérisée en ce que** la coiffe de couverture (38) et le bout d'arbre (35) sont réalisés en une seule pièce.

9. Armature réglable (1) selon la revendication 7 ou 8, **caractérisée en ce que** la roue extérieure (4) comprend un fond (9) avec un alésage central, dans lequel le bout d'arbre (35) est supporté avec sa coiffe de couverture (38), **en ce que** le bout d'arbre (35) est maintenu contre le fond (9) avec une rondelle de fixation (43), et **en ce que** la rondelle de fixation (43) comprend un bord d'étanchéité (40), qui recouvre la fente radiale entre le bout d'arbre (35) et le fond (9) sous une précontrainte orientée axialement contre le fond (9).

10. Armature réglable (1) selon la revendication 9, **caractérisée en ce que** le fond (9) est enfoncé en forme d'assiette sur le côté tourné vers la rondelle de fixation (43).

11. Armature réglable (1) selon la revendication 9 ou 10, **caractérisée en ce que** le fond (9) comprend une collerette emboutie (21) entourant l'alésage, dans laquelle le bout d'arbre (35) est monté.
